Europäisches Patentamt

European Patent Office

Office européen des brevets

(11) Veröffentlichungsnummer: **0 231 450**
**B1**

(12) **EUROPÄISCHE PATENTSCHRIFT**

⑫ ⑲

(45) Veröffentlichungstag der Patentschrift:
**11.10.89**

(21) Anmeldenummer: **86115905.1**

(22) Anmeldetag: **15.11.86**

(51) Int. Cl.⁴: **B60R 25/02**

(54) Sicherheitslenkschloss bei eingestecktem Schlüssel.

(30) Priorität: **11.12.85 FR 8518330**

(43) Veröffentlichungstag der Anmeldung:
**12.08.87 Patentblatt 87/33**

(45) Bekanntmachung des Hinweises auf die Patenterteilung:
**11.10.89 Patentblatt 89/41**

(84) Benannte Vertragsstaaten:
**DE ES FR GB IT**

(56) Entgegenhaltungen:
**FR-A- 2 450 721**
**FR-A- 2 487 096**
**GB-A- 2 024 924**
**GB-A- 2 051 205**
**GB-A- 2 063 985**
**NL-A- 7 506 557**
**US-A- 3 914 967**

(73) Patentinhaber: **NEIMAN, 39 Avenue Marceau,**
**F-92400 Courbevoie(FR)**

(72) Erfinder: **Neyret, Guy, 11, rue du Fort,**
**F-69340 Francheville(FR)**

(74) Vertreter: **Patentanwaltsbüro Cohausz & Florack,**
**Postfach 14 01 20 Schumannstrasse 97,**
**D-4000 Düsseldorf 1(DE)**

ACTORUM AG

**Beschreibung**

Die Erfindung bezieht sich auf ein Lenkschloß für Kraftfahrzeuge mit einem elastisch in Verriegelungsstellung zurückholbaren Riiegel, der durch Drehung eines Zylinderkerns mit Schlüsseln betätigbar ist, und Mittel zum Halten des Riegels in zurückgezogener Stellung, die durch Abzug des Schlüssels auslösbar sind und einen Schlüsseltaster umfassen, der radial im Zylinderkern gleitet und mit einem Gleitstück zusammenwirkt, das im Gehäuse des Lenkschlosses senkrecht zur Achse des Zylinderkerns beweglich ist und elastisch in Richtung des genannten Zylinderkerns zurückgeholt wird, wobei das genannte Gleitstück mit einer Aussparung eines Zugstabs zussammenwirkt, der beim Verschieben mit dem genannten Riegel eine feste Einheit bildet.

Um ein ungewolltes Sperren des Lenkschlosses beim Zurückdrehen des Schlüssels in die Haltstellung zu verhindern, also auch dann, wenn das Fahrzeug noch rollen kann, müssen Lenkschlösser Mittel umfassen, die eine Freigabe des Sperriegels nur durch eine freiwillige Handlung des Fahrers ermöglichen. Im allgemeinen besteht diese freiwillige Handlung des Fahrers im Abziehen des Schlüssels.

Es ist ein Lenkschloß bekannt, bei dem die Sicherheitsvorrichtung aus einem Taster besteht, der im Zylinderkern sitzt, senkrecht zu desen Achse gleitet und in der Winkelstellung des Zylinderkerns zum Verriegeln mit einem Ende eines Hebels zusammenwirkt, dessen anderes Ende zum Zusammenwirken mit dem Riegel vorgesehen ist. Dieser Hebel muß, um eine Bewegung des Lenkschlosses zu ermöglichen, eine Schwingachse haben und der Wirkung einer Rückholfeder ausgesetzt sein, was einen umständlichen Zusammenbau bedingt und eine nur begrenzte Betriebssicherheit bietet, weil insbesondere der genannte Hebel durch Vibrationen nachteilig beeinflußt wird.

Aus der GB-A 2 024 924 ist es bekannt, einen einteiligen Schlüsselabtaster entlang einer Ausnehmung des Schlüsselschaftes gleiten zu lassen. In bestimmten Schloßdrehstellungen ist der Schlüssel nicht abziehbar und dre Schlüsselschaft weist auf einer Seite eine andere Form auf als auf der gegenüberliegenden Seite, so daß ein reversibler Schlüssel nicht verwendet werden kann.

Aufgabe der Erfindung ist es, für das Halten des Sperriegels, solange der Schlüssel nicht abgezogen ist, sichere und wirtschaftliche Mittel bei einfacher Montage zu schaffen. Zu diesem Zweck ist das erfindungsgemäße Lenkschloß dadurch gekennzeichnet, daß das Mittel zum Halten des Riegels in ein Gleitstück und einen Taster aufgeteilt ist, daß der Zugstab zweiseitig das Gleitstück in der Abzugsstellung umfaßt, und die genannte Aussparung nach hinten durch einen Schlitz verlängert ist, der eine kleinere Breite hat, das genannte Gleitstück aber eine Breite aufweist, die geringfügig kleiner als die des genannten Schlitzes ist, und an einem Teil seiner Höhe eine Uberdicke hat, die breiter als der genannte Schlitz aber schmaler als die genannte Aussparung ist.

Die Erfindung wird besser verständlich beim Lesen der folgenden Beschreibung unter Bezugnahme auf die beigeheftete Zeichnung, in der:

- Figur 1 eine Ansicht im Längsschnitt eines Lenkschlosses gemäß einem Ausführungsbeispiel der Erfindung in Verriegelungsstellung ist;
- Figur 2 ist eine perspektivische Schemaansicht eines Teils des Lenkschlosses der Figur 1 in Verriegelungsstellung:
- Figur 3 stellt analog zur Figur 1 das Lenkschlöß in Fahrstellung des Fahrzeugs dar, und
- Figur 4 zeigt analog zu den Figuren 1 und 3 das Lenkschloß in Entriegelungsstellung vor Abzug des Schlüssels.

Im beschriebenen Beispiel umfaßt das Lenkschloß einen Sperriegel 1, der beim Verschieben fest mit einem Zugstab 2 verbunden ist, den eine Feder 3 in die Verriegelungsstellung drückt. Der Zugstab 2 umfaßt einen Vorsprung 4, der mit einem Drehnocken 5 zusammenwirkt, der das Einholen des Riegels 1 in Entriegelungsstellung besorgt. Der Nocken 5 ist in Drehung fest mit dem Zylinderkern 6 eines Schließzylinders mit Stiftzuhaltungen 7 verbunden. Im dargestellten Beispiel ist der Zylinderkern 6 gleitend gelagert, um mit dem Nocken 5 in Eingriff zu gelangen, doch ist die Erfindung ebenso gut anwendbar für herkömmliche Schlösser ohne gleitenden Zylinderkern.

Erfindungsgemäß gleitet ein Taster 8 in einer Radialbohrung 9 des Zylinderkerns 6 und kann in den Schlüsselkanal 10 des Zylinderkerns eindringen. Der Taster 8 stützt sich mit seinem dem Kanal 10 entgegengesetzten Ende auf ein Gleitstück 11 ab, das radial im Zylindergehäuse 12 des Schlosses beweglich ist und in die Bohrung 9 eindringt. Das Gleitstück 11 wird durch eine Feder 13 in Richtung Zylinderkern 6 gedrückt.

Das Gleitstück 11 umfaßt einen Schuh 14, der ein Verschieben im Zylindergehäuse 12 begrenzt, und einen Körper 15 geringer Breite, der in einem Schlitz 16 am Ende des Zugstabes 2 gleiten kann. Der Schlitz 16 mündet in eine Aussparung 17 mit größerer Breite ein. Der Körper 15 des Gleitstücks 11 umfaßt eine Überdicke 18, die breiter ist als der Schlitz 16, aber schmaler als die Aussparung 17. Die Überdicke 18 umfaßt in Richtung Zugstab 2 eine Abschrägungsfläche 19 und, daran anschließend, einen Absatz 20.

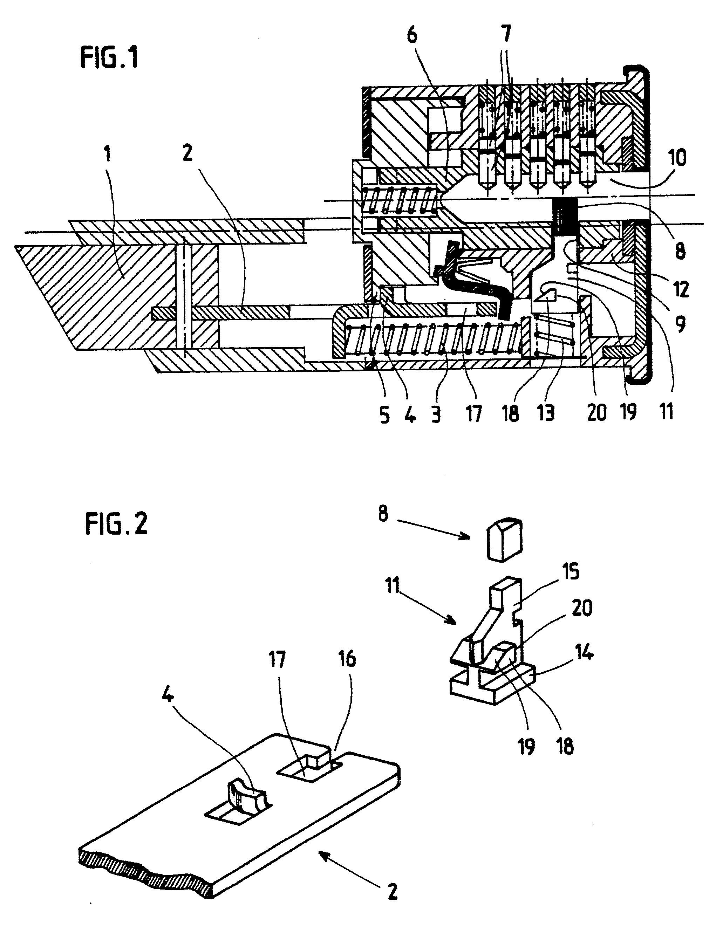

In Verriegelungsstellung (Fig. 1 und 2) ist der Kanal leer, und der Taster 8, durch das Gleitstück 11 unter der Wirkung der Feder 13 weggedrückt, ist in den Kanal 10 eingedrungen. Der Riegel 1 befindet sich unter der Wirkung der Feder 3 in vorgeschobener Stellung, und der Zugstab 2 ist dem Gelitstück 11 vollständig entwichen.

Durch das Einführen des Schlüssels 21 in den Kanal 10 werden der Taster 8 und das Gleitstück 11 gegen die Wirkung der Feder 13 zurückgedrückt. Der Taster 8 umfaßt einen spitzen Kopf, der mit der Spitze des Schlüssels zwecks Erleichterung dieser Bewegung zusammenwirkt. Die Stellung des Gleitstücks 11 ist so, daß die Überdicke 18 über dem Schlitz 16 des Zugstabs 2 liegt.

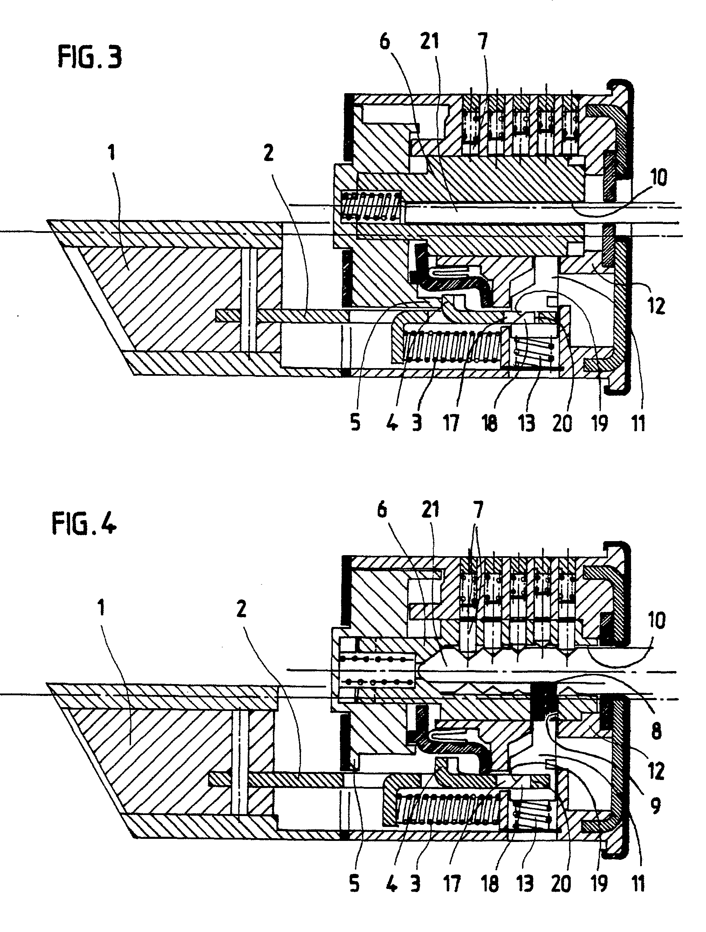

Die Drehung des Schlüssels 21 erzeugt über den Zylinderkern 6 eine Drehung des Nochens 5, der über den Vorssprung 4 des Zugstabs 2 den Riegel 1 gegen die Wirkung der Feder 3 einzieht. Im Verlauf dieser Verschiebung kommt das freie Ende des Zugstabs 2 gegen das Gleitstück zu liegen, und der Schlitz 16 umfaßt an beiden Seiten der Körper 15. Das freie Ende des Zugstabs gleitet an der Abschrägungsfläche 19 und drückt dabei das Gleitstück 11 leicht nach unten (in der Zeichnung) gegen die Wirkung der Feder 13. Am Ende des Laufwegs sitzt die Überdicke 18 des Gleitstücks 11 ganz in der Aussparung 17, und der Absatz 20 befindet sich gegenüber dem Rand der Aussparung 17, in den der Schlitz 16 mündet. Diese Stellung ist in Figur 3 dargestellt.

Wird nun der Schlüssel 21 in umgekehrtem Sinne gedreht, um ihn in die Abzugsstellung zu bringen (Fig. 4), liegt der Nocken 5 nicht mehr gegen den Vorssprung 4 des Zugstabs 2 an, und dieser verschiebt sich unter der Wirkung der Feder 3 nach links (in der Zeichnung), doch diese Verschiebung ist begrenzt durch den Anschlag des Endes der Aussparung 17 neben dem Schlitz 16 gegen den Absatz 20 der Überdicke 18. Der Riegel 1 wird in Rückzugsstellung gehalten.

Wenn dann der Schlüssel 21 abgezogen wird, dringt der Taster 8, sobald die Spitze des Schlüssels über ihn hinweggegangen ist, unter der Wirkung der auf das Gleitstück 11 einwirkenden Feder 13 in den Kanal 10 ein. Gleichzeitig wird das Gleitstück 11 verschoben, und sobald der Absatz 20 aus dem Fenster 17 austritt, ist der Zugstab frei und gleitet unter der Wirkung der Feder 3, wobei der Schlitz 16 um den Körper 15 des Gleitstücks 11 gleitet. Der Riegel 1 stützt sich wieder an der Lenkwelle (nicht dargestellt) ab und dringt nach Drehen des Lenkrads in den Schlitz einer Sperrmuffe der Lenkwelle ein. Das Lenkschloß befindet sich wieder in der Verriegelungsstellung nach Figur 1.

**Patentansprüche**

1. - Lenkschloß für Kraftfahrzeuge, in der Ausführung, die umfaßt einen elastisch in Verriegelungsstellung zurückgeholten Riegel, der betätigt wird durch Drehung eines Zylinderkerns mit Schlüssel, und Mittel zum Halten des Riegels in zurückgezogener Stellung, die durch Abzug des Schlüssels ausgelöst werden, dadurch gekennzeichnet, daß die genannten Mittel zum Halten umfassen einen Schlüsseltaster (8), der radial im Zylinderkern (6) gleitet und in winkeliger Verriegelungsstellung des Zylinderkerns (6) mit einem Gleitstück (11) zusammenwirkt, das im Gehäuse (12) des Lenkschlosses senkrecht zur Achse des Zylinderkerns (6) beweglich ist und elastisch in Richtung des genannten Zylinderkerns (6) zurückgeholt wird, wobei das genannte Gleitstück (11) mit einer Aussparung (17) eines Zugstabs (2) zusammenwirkt, der beim Verschieben mit dem genannten Riegel (1) eine feste Einheit bildet, und die genannte Aussparung (17) nach hinten durch einen Schlitz (16) verlängert ist, der eine kleinere Breite hat, das genannte Gleitstück (11) aber eine Breite aufweist, die geringfügig kleiner als die des genannten Schlitzes (16) ist, und an einem Teil seiner Höhe eine Überdicke (18) hat, die breiter als der genannte Schlitz 16, aber schmaler als die genannte Aussparung (17) ist.

2. - Lenkschloß gemäß Anspruch 1, dadurch gekennzeichnet, daß die genannte Überdicke (18) in Richtung des Riegels (1) eine Abschrägungsfläche (19) umfaßt.

3. - Lenkschloß gemäß einem der Ansprüche 1 und 2, dadurch gekennzeichnet, daß die genannte Überdicke (18) in der dem Riegel (1) entgegengesetzten Richtung einen Absatz (20) umfaßt.

**Claims**

1. A steering lock for a motor vehicle comprising a locking bar (1) which is elastically returnable into its locking position, and which is activated by turning the core of a cylinder by means of a key, and means (2, 11) for holding the locking bar (1) in the retracted position, which are released by withdrawal of the key and which comprise a key-feeling pin (8) which slides radially in the cylinder core (6) and cooperates with a sliding piece (11), which is movable in the housing (12) of the steering lock perpendicularly to the axis of the cylinder core (6) and is elastically returned towards the said cylinder core (6), wherein the said sliding piece (11) cooperates with an opening (17) is a pulling bar (2) which forms a rigid unit with the said locking bar (1) during movement, characterized in that the means (2, 11) for holding the locking bar (1) are divided into a sliding piece (11) and a feeler pin (8), in that the pulling bar (2) surrounds the sliding piece (11) on both sides in the retracted position, and the said opening (17) is prolonged backwards by a slot of narrower width, and in that the said sliding piece (11) has a width which is slightly less than that of the said slot (16), but on part of its height the sliding piece has a thickened section (18) which is wider than the said slot (16) but narrower than the said opening (17).

2. A steering lock according to Claim 1, characterized in that the said thickened section (18) comprises a bevelled surface (19) on the side towards the locking bar (1).

3. A steering lock according to one of Claims 1 and 2, characterized in that the said thickened section (18) comprises a shoulder (20) on the side away from the locking bar (1).

**Revendications**

1. Antivol de direction pour véhicule automobile du type comprenant un pêne (1) rappelé élastiquement en position de verrouillage et commandé par la rotation d'un rotor à clé, et un moyen (2, 11) de retenue du pêne (1) en position effacée qui sont déclenchés par l'extraction de la clé, et comprenant un palpeur de clé (8) coulissant radialement dans le rotor (6) et coopérant, avec un coulisseau (11) mobile dans le boîtier (12) d'antivols orthogonalement à l'axe du rotor (6) et rappelé élastiquement vers ledit rotor (6), ledit coulisseau (11) coopérant avec une découpure (17) d'une tirette (2) qui forme avec ledit pêne (1) un ensemble monobloc en déplacement, caractérisé en ce que le moyen (2, 11) de retenue du pêne (1) est scindé en un coulisseau (11) et un palpeur (8), que la tirette (2), en position d'extraction, entoure sur deux faces le coulisseau (11), et en ce que ladite découpure (17) étant prolongée vers l'arrière par une fente (16) de plus petite largeur, ledit coulisseau (11) ayant une largeur légèrement inférieure à celle de ladite fente (16) et comporte, sur une partie de sa hauteur, une surépaisseur (18) de largeur supérieure à celle de ladite fente (16) mais inférieure à celle de ladite découpure (17).

2. Antivol selon la revendication 1, caractérisé par le fait que ladite surépaisseur (18) comporte, en direction du pêne (1), un biseau (19).

3. Antivol selon l'une des revendications 1 et 2, caractérisé par le fait que ladite surépaisseur (18) comporte, en direction opposée au pêne (1), un talon (20).

EP 0 231 450 B1

FIG.1

FIG.2

FIG. 3

FIG. 4